# FASCICULE DE BREVET EUROPEEN

(11) **EP 4 291 014 B1**
(45) Date de publication et mention de la délivrance du brevet: **01.10.2025**
(21) Numéro de dépôt: 22704349.4
(22) Date de dépôt: 03.02.2022
(51) Int. Cl.: A01G 18/40, A01G 18/50, A01G 18/64, A01G 9/029

(54) **DISPOSITIF DE BLANC DE SEMIS DE MORILLES**
VORRICHTUNG ZUM SÄEN VON MORCHELN
MOREL SEEDLING SPAWN DEVICE

(30) Priorité: 10.02.2021 FR 2101281
(43) Date de publication de la demande: 20.12.2023
(73) Titulaire: Girard, Pierre Gilbert David, 74410 Saint-Jorioz (FR)
(72) Inventeur: Girard, Pierre Gilbert David, 74410 Saint-Jorioz (FR)
(74) Mandataire: Innovincia
(86) Numéro de dépôt international: PCT/EP2022/052544
(87) Numéro de publication internationale: WO 2022/171514

(56) Documents cités:
- EP-A1- 3 197 258
- EP-A1- 3 769 610
- EP-B1- 3 197 258
- CN-A- 108 794 274
- CN-A- 110 249 910
- GB-A- 2 571 988
- US-A1- 2004 000 090

## Description

La présente invention concerne un dispositif de blanc de semis de morilles. L'invention concerne également une plantation de dispositifs de blancs de semis et un procédé de préparation d'un dispositif de blanc de semis.

La culture de champignons saprophytes, c'est-à-dire tirant de manière opportune les substances disponibles qu'ils peuvent assimiler des matières organiques en décomposition, et notamment la morille, nécessite un savoir-faire particulier. Les champignons doivent être cultivés dans un environnement contrôlé reproduisant le climat et l'hygrométrie des sous-bois. Le sol doit être particulièrement contrôlé également.

La culture de la morille nécessite la préparation d'un blanc de semis qui est ensuite implanté en terre et nourri jusqu'à la fructification. Un problème majeur est que le blanc de semis est un produit frais particulièrement délicat dont les performances se dégradent rapidement. Pour garder son efficacité, il doit nécessairement être utilisé frais et ne peut que difficilement être transporté. Le blanc de semis de morilles doit cependant être employé dans des conditions précises de tensiométrie du sol (capacité hydrique) et de température de l'air, généralement dépendantes du climat quand la culture est réalisée en extérieur. De ce fait, l'implantation immédiate en terre du blanc de semis après confection de par sa rapide péremption, peut ne pas correspondre aux conditions climatiques du moment. Si les conditions ne sont plus ou pas encore favorables lorsque le blanc de semis est disponible, il perd en efficacité, induisant une perte de rendement.

Un autre problème est que le développement en terre du mycélium de morilles jusqu'à sa fructification dépend de la quantité de nourriture apportée et que cette nourriture n'est pas exclusive au mycélium cultivé.

Il existe aujourd'hui une méthode de culture du mycélium utilisant des sacs de semis contenant des grains de blé inoculés par ce mycélium. Une fois prêts, les sacs de semis sont ouverts pour répartir le blanc de semis sur la terre et l'enfouir. Une nutrition, conditionnée en sacs plastiques, est apportée en surface après une période d'incubation. Cette technique, proposée initialement par R. Ower, et décrite dans le document US4757640, est largement utilisée pour la production d'ascocarpes (organes de fructification) de morilles depuis l'identification des séquences génétiques des souches fructifères de morilles du clade Elata. Le problème de cette technique est le défaut d'exclusivité : la nourriture est en bonne partie consommée par les bactéries, la pédofaune et les champignons qui se servent au détriment du mycélium de morille. De plus, les risques liés aux contaminations extérieures sont nombreux. Un autre inconvénient majeur de cette application est la péremption de la nourriture en surface et l'impact négatif de son compostage sur les rendements attendus.

Cette méthode de confection et mise en terre des blancs de semis consomme beaucoup de main d'œuvre, engendrant des coûts de production relativement importants.

Enfin, la culture sur des surfaces agricoles ne permet pas d'obtenir des morilles dont le goût est aussi caractéristique que celui que l'on peut constater avec le champignon cueilli dans les bois, du fait de la différence du taux de matière organique en décomposition présent dans le sol cultivé.

US 2004/000090 A1, EP 3 197 258 A1 et EP 3 769 610 A1 illustrent des solutions alternatives de dispositif de support de mycélium. CN 110 249 910 A et CN 108 794 274 A décrivent des méthodes alternatives de culture de morilles.

Un but de la présente invention est de proposer un dispositif de blanc de semis résolvant au moins en partie un des inconvénients précités.

A cet effet, l'invention a pour objet un dispositif de blanc de semis de morilles comportant un mycélium de morille et un substrat caractérisé en ce qu'il comporte un insert poreux en céramique configuré pour être inséré en terre, l'insert poreux formant un support pour le substrat inoculé par le mycélium de morille.

La barrière poreuse de la céramique permet un nourrissement efficace du mycélium. En effet, une alimentation par solution liquide sucrée peut être fournie dans l'insert pour le développement du mycélium, la barrière poreuse de la céramique de l'insert permettant de filtrer cette alimentation liquide, à base d'eau et de glucides, pour conserver les glucides dans l'insert et relâcher progressivement l'eau qui a servi de support d'acheminement pour les glucides. De cette façon, l'insert poreux permet la destination exclusive de la nutrition au mycélium cultivé tout en permettant l'évacuation progressive de l'eau par les pores de la céramique, faisant de l'insert une interface de distribution efficiente. En effet, la porosité de l'insert empêche la stagnation de l'eau et permet un échange gazeux exempt d'impuretés au profit du mycélium contenu dans l'insert. De plus, la nature de la céramique permet d'embarquer des bactéries symbiotiques comme par exemple la Pseudomonas Putida, qui permettent d'augmenter davantage les rendements. La céramique est alors inoculée à la fois par le mycélium de morille et par la Pseudomonas.

Le mycélium est alors protégé des attaques extérieures par l'insert qui forme une barrière de protection face aux rongeurs, fouisseurs, à la pédofaune ou autres contaminants comme les bactéries ou mycéliums compétiteurs. Ainsi, on augmente significativement l'apport nutritif des matières premières au profit du mycélium. La surface de propagation du mycélium autour de l'insert peut être maitrisée par la quantité de nutriments stockée et consommée au sein de l'insert. Le mycélium peut ainsi bénéficier d'une alimentation homogène et exclusive, offrant à l'exploitant une régularité des apports nutritifs et une maitrise accrue des rendements.

L'insert permet également de conditionner la direction de propagation du mycélium à l'intérieur de l'insert vers le haut, puis en surface immédiate sur le sol autour de l'insert. On peut ainsi déterminer avec précision les points d'implantation et contrôler la propagation des mycéliums, notamment pour faciliter leurs collisions propices aux formations de sclérotes, ce qui permet d'améliorer le rendement.

De plus, le fait que l'insert soit enterré permet de soustraire son contenu aux conditions climatiques. En effet, l'enfouissement des inserts dans le sol protège les mycéliums des basses températures de l'hiver. Le mycélium peut ainsi être nourri de manière plus efficiente que dans les techniques de l'art antérieur où les nutriments sont déposés en surface du sol et exposés aux basses températures qui ralentissent sa consommation. De plus, l'insertion en terre permet une application en condition de gel lors d'une culture hivernale.

Par ailleurs, les coûts de production sont fortement réduits du fait de la facilité de réalisation du dispositif de blanc de semis.

Le dispositif de blanc de semis est clé en main, c'est-à-dire immédiatement prêt à être utilisé, sans nécessiter de savoir-faire particulier de la part du cultivateur.

Les matériaux traitables à la stérilisation à haute température (nécessaires dans le procédé de préparation du blanc de semis de champignons) sont rares et le plastique à usage unique prépondérant. La nature de la céramique de l'insert lui permet d'être stérilisable. La céramique permet de relâcher l'air lors de la stérilisation qui induit une mise sous pression puis une expansion en sortie de cycle de stérilisation. Les contenants en plastique à usage unique de l'art antérieur en revanche doivent être équipés de « soupape » pour ne pas exploser lors de ce processus. L'insert peut ainsi être autoclavé plusieurs fois sans risque d'altération. La céramique offre une alternative écologique au plastique avec un coût de production réduit, la céramique étant réutilisable et ne générant pas de pollution à la production, lors de son utilisation et de son réemploi dans la culture de différents champignons saprophytes.

De plus, les dispositifs de blanc de semis peuvent être directement implantés en sous-bois, rendant possible une application agroforestière sans qu'il soit nécessaire d'en travailler le sol au préalable.

Le dispositif de blanc de semis peut en outre comporter une ou plusieurs des caractéristiques qui sont décrites ci-après, prises seules ou en combinaison.

L'insert présente par exemple une forme de contenant. Il présente une cavité ouverte permettant notamment de recevoir le substrat inoculé. Ce substrat inoculé peut aussi être contenu dans la paroi de l'insert s'il est liquide. Dans ces deux cas, la cavité de l'insert permet le recueil d'une alimentation additionnelle exogène.

La cavité de l'insert présente par exemple un volume supérieur à 100cm³, tel que 120cm³, ou tel que supérieur à 250cm³, tel que 300cm³. Une capacité volumétrique supérieure à 250cm³ permet d'emmagasiner davantage de liquide nutritif à chaque nourrissement, ce qui présente un avantage en cas d'absence de dispositif d'alimentation automatisé. En effet, sans régulation automatique, il est délicat de fournir une alimentation avec suffisamment de précision pour ne pas saturer un petit contenant.

L'aire de l'ouverture est par exemple supérieure ou égale à 5cm² et/ou inférieure à 30cm², telle que 12,50cm².

L'insert présente par exemple une forme évasée configurée pour faciliter l'insertion en terre. La section de l'insert va en s'amincissant vers la portion extrémale la plus profondément enfouie dans le sol.

L'insert présente par exemple une portion extrémale en pointe, à l'opposé de l'ouverture, dont la section va en s'amincissant, par exemple de type « plantoir ». La portion extrémale est par exemple conique ou polygonale pointue, telle qu'hexagonale pointue. Cette forme permet l'insertion en terre sans outil supplémentaire.

L'insert peut présenter une portion extrémale arrondie, rendant l'insert moins cassant, ce qui facilite son transport. Cette forme facilite également le nettoyage de l'insert.

Le dispositif de blanc de semis peut comporter un couvercle dans lequel est ménagé une ouverture. Ainsi l'insert peut présenter un plus grand volume permettant d'accueillir plus de substrat au départ et plus de nourrissement liquide par la suite, tout en ayant une ouverture en partie supérieure de taille réduite, ce qui permet de protéger le contenu de l'insert notamment en limitant les effluves du contenu qui pourraient attirer les rongeurs. L'aire de cette ouverture ménagée dans le couvercle est par exemple supérieure ou égale à 5cm² et/ou inférieure à 30cm², telle que 12,50cm².

La surface externe du couvercle au moins peut être imperméable, c'est-à-dire non-poreuse. Pour cela, le couvercle peut être revêtu. Il est par exemple peint ou émaillé. L'imperméabilité du couvercle encourage le mycélium à quitter le dispositif pour rejoindre la surface de la terre plutôt que de se concentrer sur le dispositif.

Le couvercle peut être fixé de manière inamovible à l'insert. Le couvercle et l'insert sont par exemple formés d'une seule pièce en matériau céramique, le couvercle pouvant être revêtu pour être rendu imperméable.

Le couvercle peut être configuré pour s'assembler de manière amovible avec l'insert, par exemple par emboitage. Ce mode de réalisation rend le remplissage et le nettoyage de l'insert plus aisé.

La porosité de la céramique est par exemple comprise entre 5% et 15%, telle que comprise entre 5% et 9%.

La hauteur de l'insert est par exemple supérieure ou égale à 5cm, telle que de 15cm.

Afin de bien filtrer l'eau et conserver un maximum de glucides au sein de l'insert dans le cas d'une alimentation additionnelle, la paroi de l'épaisseur de la céramique de l'insert est par exemple supérieure à 2mm, telle que supérieure ou égale à 3mm.

La céramique comporte par exemple un mélange de calcite et d'argile, par exemple dans des proportions à peu près équivalentes (50% +/- 15%), d'oxyde de fer et des sels de carbonate de calcium. Ce type de céramique peut également être appelé « terracotta ». Du mélange de ces divers éléments résultent des caractéristiques optimales de porosité de l'insert. Le carbonate de calcium est de plus un élément chimique omniprésent dans les recettes de blancs de semis de champignon et son emploi sous forme de terre cuite permet de constituer un support adéquat à une propagation du mycélium. L'oxyde de fer est identifié comme facteur bénéfique à l'augmentation de la vie bactérienne dans le substrat, favorisant la formation des sclérotes, puis des primordia (stade naissant) de la morille. L'oxyde de fer augmente entre autres la présence de certaines bactéries Pseudomonas comme par exemple la bactérie Pseudomonas Putida, récemment identifiée comme interagissant avec le mycélium de morille par nature opportuniste, en utilisant ses hyphes (filament de mycélium) comme voies de transit, tout en induisant la structuration d'un réseau mycélien favorable à l'augmentation de la formation de sclérotes. Également, la terre employée pour la confection de ce type de céramique est naturellement neutre, inerte par rapport à l'eau et son taux d'humidité intrinsèque maximum est de 9 % une fois cuite.

Le substrat comporte par exemple un tourteau de céréales, tel que de seigle, d'orge ou de blé. Le tourteau de céréales permet de fortement emmagasiner l'eau et de la transmettre à la céramique de l'insert. Une fois imbibée d'eau, la céramique est rapidement colonisée par le mycélium.

Ce substrat peut également comporter une matière calcique dans une proportion inférieure à 1,5% du poids du tourteau de céréales humide, comme par exemple 1%. La matière calcique est par exemple du carbonate de calcium. La matière calcique permet d'ajuster le pH du substrat, support de la propagation du mycélium.

Le dispositif de blanc de semis peut être lyophilisé. Le dispositif de blanc de semis peut ainsi être mieux conservé. C'est la porosité de la céramique de l'insert, permettant à l'eau de s'évacuer par les pores, qui rend possible la lyophilisation. Une fois déshydraté, l'état du mycélium est durablement figé dans le temps. En effet, l'absence d'eau arrête sa propagation. L'absence d'eau lui permet également d'être moins vulnérable aux contaminations et il peut être manipulé pour être stocké ou transporté pour une utilisation ultérieure, ce qui est particulièrement intéressant pour une destination commerciale grand public du dispositif de blanc de semis. Le dispositif de blanc de semis lyophilisé peut par exemple être conservé au frais dans des conditions de conservation alimentaires allongeant la date limite de conservation à quelques mois.

L'invention a aussi pour objet une plantation de dispositifs de blancs de semis comportant plusieurs dispositifs de blanc de semis tels que décrits précédemment, insérés en terre.

Les dispositifs de blanc de semis sont insérés par exemple de manière à ce que l'ouverture des inserts affleure la surface du sol. On considère que le dispositif de blanc de semis affleure la surface du sol lorsqu'il ne dépasse pas de plus de 1cm la surface du sol ou lorsqu'il n'est pas enterré plus de 2cm sous la surface du sol. En effet si le dispositif de blanc de semis est trop enfoui, on perd en performances du fait de la distance supplémentaire que doit parcourir le mycélium avant de rejoindre la surface du sol pour la coloniser.

De préférence, le dispositif de blanc de semis est recouvert d'une couche de terre par exemple comprise entre 0,5cm et 1,5cm. Cette couche de terre permet de réduire la perception olfactive du substrat contenu dans l'insert (généralement à base de céréales) dans les quelques jours précédents leur colonisation par le mycélium et ainsi de réduire leur attirance auprès des rongeurs ou autres animaux.

Les dispositifs de blanc de semis sont par exemple disposés en ligne, et sont par exemple plantés en quinconce.

Les dispositifs de blanc de semis sont avantageusement espacés les uns des autres d'une distance inférieure à 50cm. On favorise ainsi la formation des sclérotes dans les zones de rencontre des propagations des mycéliums. En plus de favoriser la formation des sclérotes, ce maillage permet de mieux maitriser l'emplacement de leurs formations.

La plantation peut également comporter un dispositif d'alimentation, par exemple de type goutte à goutte, configuré pour fournir une solution liquide nutritive dans les inserts par exemple par micro-irrigation. Ce dispositif d'alimentation permet d'améliorer nettement le rendement notamment en ne limitant pas l'approvisionnement du mycélium à la capacité nutritive initiale contenue dans l'insert. De plus, la nutrition sous format liquide ne stagne pas en surface comme c'est le cas de la nourriture contenue dans les sacs en plastique de l'art antérieur, ce qui l'empêche de se composter et de polluer le mycélium. La solution liquide nutritive apportée par le dispositif d'alimentation comporte par exemple un mélange de d'eau et de glucides (aussi appelés sucres), par exemple 60% d'eau et 40% de glucides, tels que des oligosaccharides ou des polysaccharides. L'eau sert de support d'acheminement pour les glucides jusqu'aux inserts. La barrière poreuse de l'insert permet alors de conserver les glucides et de relâcher progressivement l'eau qui a servi à son transit, ce qui permet une accumulation exclusive de la nutrition au profit du mycélium cultivé au sein de l'insert. La porosité de l'insert permet ainsi de nourrir le mycélium sans risque de pourrissement par stagnation de l'eau.

Le dispositif d'alimentation des dispositifs de blanc de semis d'une plantation comporte par exemple des conduites reliées les unes aux autres en série, par exemple sur une ligne. Ce dispositif permet un apport d'une même nourriture distribuée à tous les inserts de façon homogène et centralisée, qu'il soit unique, régulier ou à la demande.

L'invention a aussi pour objet un procédé de préparation d'un dispositif de blanc de semis selon lequel l'insert est rempli avec un substrat inoculé par injection d'un mycélium à travers l'ouverture de l'insert.

L'invention a aussi pour objet un procédé de préparation d'un dispositif de blanc de semis selon lequel l'insert humecté par le substrat est inoculé par injection d'un mycélium dans la cavité de l'insert. Le substrat est alors réalisé sous forme de solution aqueuse sucrée.

Dans les procédés précédemment décrits, le mycélium injecté est de préférence sous format liquide.

D'autres avantages et caractéristiques apparaîtront à la lecture de la description de l'invention, ainsi que sur les figures annexées qui représentent une forme d'exécution de réalisation non limitative de l'invention et sur lesquelles :
[Fig.1] La figure 1 est une vue partielle d'un exemple de plantation de dispositifs de blancs de semis plantés en terre, la terre étant représentée par transparence pour permettre la visualisation desdits dispositifs.
[Fig.2] La figure 2 montre une vue en perspective d'un dispositif de blanc de semis de la figure 1.
[Fig.3] La figure 3 schématise la propagation du mycélium autour de l'insert du dispositif de blanc de semis de la figure 2.
[Fig.4] La figure 4 est un organigramme montrant les différentes étapes d'un premier exemple de procédé de préparation d'un dispositif de blanc de semis.
[Fig.5] La figure 5 est un organigramme montrant les différentes étapes d'un deuxième exemple de procédé de préparation d'un dispositif de blanc de semis.
[Fig.6] La figure 6 montre une vue en perspective d'un dispositif de blanc de semis selon une variante de réalisation disposé à côté de l'insert du dispositif de blanc de semis de la figure 2.
[Fig.7] La figure 7 montre une vue de côté d'un dispositif de blanc de semis selon une autre variante de réalisation, à l'état désassemblé.
[Fig.8] La figure 8 montre une autre vue du dispositif de blanc de semis de la figure 7.

Sur ces figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

On désigne par « blanc de semis », le mycélium se développant depuis l'inoculation jusqu'à l'incubation complète d'un substrat, formant le produit employé par un exploitant.

On désigne par « substrat » (ou média), le support nutritif initial permettant la propagation du mycélium dans le dispositif de blanc de semis.

On désigne par « inoculer » l'opération d'introduction du mycélium dans le substrat, notamment par injection.

On désigne par « céramique » le matériau comprenant de la terre (ou de l'argile) cuite, notamment entre 850°C et 1000°C. La porosité d'une céramique dépend de son taux de vitrification qui est défini par sa température de cuisson.

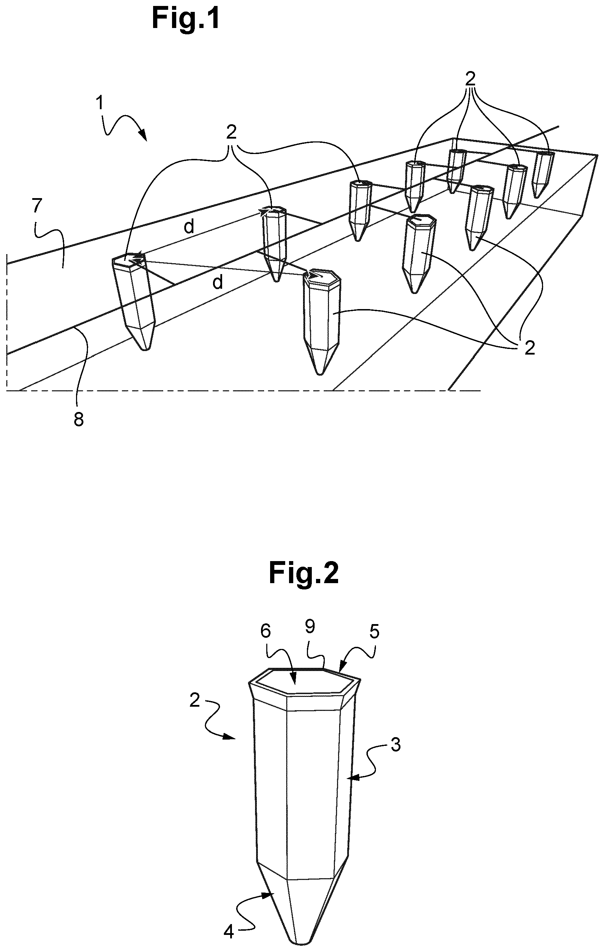

La figure 1 montre un exemple de plantation 1 de dispositifs de blancs de semis 2 de morilles comportant plusieurs dispositifs de blanc de semis 2 insérés en terre.

Un dispositif de blanc de semis 2 est plus particulièrement représenté sur la figure 2.

Le dispositif de blanc de semis 2 comporte un insert 3 poreux en céramique configuré pour être inséré en terre. L'insert 3 forme un support pour un substrat 6 qui est inoculé par un mycélium (également appelé inoculum du mycélium mère).

L'insert 3 présente par exemple une forme de contenant. Il présente alors une cavité 9 ouverte. Le substrat 6 inoculé est reçu dans la cavité 9 ou dans la paroi de l'insert 3 pour un substrat 6 liquide. Dans le premier cas, l'insert 3 peut recueillir une nourriture additionnelle extérieure par exemple par humectage du substrat 6 contenu dans la cavité 9. Dans le second cas, la cavité 9 de l'insert 3 peut directement être remplie par une nourriture liquide additionnelle extérieure.

L'insert 3 présente par exemple une portion extrémale 4 en pointe configurée pour faciliter l'insertion en terre sans outil supplémentaire, à l'opposé de l'ouverture 5, dont la section va en s'amincissant, par exemple de type « plantoir ». La portion extrémale 4 est par exemple conique ou polygonale pointue, telle qu'hexagonale pointue, comme on peut le voir sur les figures 1 et 2.

L'insert 3 poreux permet la destination exclusive de la nutrition au mycélium cultivé tout en permettant l'évacuation progressive de l'eau par les pores de la céramique, faisant de l'insert une interface de distribution efficiente. En effet, la porosité de l'insert 3 empêche la stagnation de l'eau et permet un échange gazeux exempt d'impuretés au profit du mycélium contenu dans l'insert 3. De plus, la nature céramique permet d'embarquer des bactéries symbiotiques comme par exemple la Pseudomonas Putida, qui permettent d'augmenter davantage les rendements.

Le mycélium est alors protégé des attaques extérieures par l'insert 3 qui forme une barrière de protection face aux rongeurs, fouisseurs, à la pédofaune ou autres contaminants comme les bactéries ou mycéliums compétiteurs. Ainsi, on augmente significativement l'apport nutritif des matières premières au profit du mycélium. La surface de propagation du mycélium autour de l'insert 3 peut être maitrisée par la quantité de nutriments stockée et consommée au sein de l'insert 3. Le mycélium peut ainsi bénéficier d'une alimentation homogène et exclusive, offrant à l'exploitant une régularité des apports nutritifs et une maitrise accrue des rendements.

L'insert 3 permet également de conditionner la direction de propagation du mycélium à l'intérieur de l'insert 3 vers son ouverture 5, puis en surface sur le sol autour de l'ouverture 5. On peut ainsi déterminer avec précision les points d'implantation et contrôler la propagation des mycéliums, notamment pour faciliter leurs collisions propices à la formation de sclérotes, ce qui permet d'améliorer le rendement.

De plus, le fait que l'insert 3 soit enterré permet de soustraire son contenu aux conditions climatiques. En effet, l'enfouissement des inserts 3 dans le sol protège les mycéliums des basses températures de l'hiver. Le mycélium peut ainsi être nourri de manière plus efficiente que dans les techniques de l'art antérieur où l'alimentation est déposée en surface du sol et exposée aux basses températures qui ralentissent sa consommation.

Par ailleurs, les coûts de production sont fortement réduits du fait de la facilité de réalisation du dispositif de blanc de semis 2.

Le dispositif de blanc de semis 2 est clé en main, c'est-à-dire immédiatement prêt à être utilisé, sans nécessiter de savoir-faire particulier de la part du cultivateur.

Les matériaux traitables à la stérilisation à haute température (nécessaires dans le procédé de préparation du dispositif de blanc de semis de morille) sont rares et le plastique à usage unique prépondérant. La nature de la céramique de l'insert 3 lui permet d'être stérilisable. L'insert 3 peut ainsi être autoclavé plusieurs fois sans risque d'altération. La céramique offre une alternative écologique au plastique avec un coût de production réduit, la céramique étant réutilisable et ne générant pas de pollution à la production, lors de son utilisation et de son réemploi dans la culture de différents champignons saprophytes.

De plus, l'insertion en terre permet une application en condition de gel lors d'une culture hivernale.

Un autre avantage est que les dispositifs de blanc de semis peuvent être directement implantés en sous-bois, rendant possible une application agroforestière sans qu'il soit nécessaire d'en travailler le sol au préalable.

La porosité de la céramique est par exemple comprise entre 5% et 15%, telle que comprise entre 5% et 9%.

La céramique comporte par exemple un mélange de calcite et d'argile, par exemple dans des proportions à peu près équivalentes (50% +/- 15%), d'oxyde de fer et des sels de carbonate de calcium. Ce type de céramique peut également être appelé « terracotta ». Du mélange de ces divers éléments résultent des caractéristiques optimales de porosité de l'insert 3. Le carbonate de calcium est de plus un élément chimique omniprésent dans les recettes de blancs de semis de champignon et son emploi sous forme de terre cuite permet de constituer un support adéquat à une propagation du mycélium. L'oxyde de fer est identifié comme facteur bénéfique à l'augmentation de la vie bactérienne dans le substrat 6, favorisant la formation des sclérotes, puis des primordia (stade naissant) de la morille. L'oxyde de fer augmente entre autres la présence de certaines bactéries Pseudomonas comme par exemple la bactérie Pseudomonas Putida, récemment identifiée comme interagissant avec le mycélium de morille, par nature opportuniste, en utilisant ses hyphes (filament de mycélium) comme voies de transit, tout en induisant la structuration d'un réseau mycélien favorable à l'augmentation de la formation de sclérotes. Par ailleurs, la terre employée pour la confection de ce type de céramique est naturellement neutre, inerte par rapport à l'eau et son taux d'humidité intrinsèque maximum est de 9 % une fois cuite.

Selon un exemple de réalisation de l'insert 3, un biscuit est obtenu à une température de 950° de façon à fixer les propriétés poreuses de la « terracotta » à hauteur de 9%.

Le volume de la cavité 9 de l'insert 2 peut être supérieur à 100cm³, tel que 120cm³, ou tel que supérieur à 250cm³, tel que 300cm³. Cette capacité volumétrique d'accueil du substrat 6 peut permettre à un insert 3 de pouvoir produire des morilles sans bénéficier d'une alimentation ultérieure.

La hauteur est par exemple supérieure ou égale à 5cm, telle que de 15cm.

L'aire de l'ouverture 5 est par exemple supérieure ou égale à 5cm², telle que 12,50cm².

Les plus petites valeurs de hauteurs, volumes et aires d'ouverture décrites ci-dessus sont à destination de cultures en environnement contrôlé (en intérieur).

Afin de bien filtrer l'eau et conserver un maximum de glucides au sein de l'insert 3 dans le cas d'une alimentation additionnelle, la paroi de l'épaisseur de la céramique de l'insert 3 est par exemple supérieure à 2mm, telle que supérieure ou égale à 3mm.

Selon un premier exemple de réalisation, le substrat 6 inoculé par le mycélium est reçu dans la cavité 9 de l'insert 3.

Le substrat 6 comporte par exemple un tourteau de céréales, tel que de seigle, d'orge ou de blé. Le tourteau de céréales permet de fortement emmagasiner l'eau et de la transmettre à la céramique de l'insert 3. Une fois imbibée d'eau, la céramique est rapidement colonisée par le mycélium.

Ce substrat 6 peut également comporter une matière calcique dans une proportion inférieure à 1,5% du poids du tourteau de céréales humide, comme par exemple 1%. La matière calcique est par exemple du carbonate de calcium. La matière calcique permet d'ajuster le pH du substrat, support de la propagation du mycélium.

Le dispositif de blanc de semis 2 peut être lyophilisé. La lyophilisation est la dessiccation d'un produit préalablement congelé par sublimation. Le dispositif de blanc de semis 2 peut ainsi être mieux conservé. C'est la porosité de la céramique de l'insert, permettant à l'eau de s'évacuer par les pores, qui rend possible la lyophilisation.

Le procédé de préparation 100 d'un dispositif de blanc de semis 2 comporte par exemple la succession d'étapes décrites ci-après.

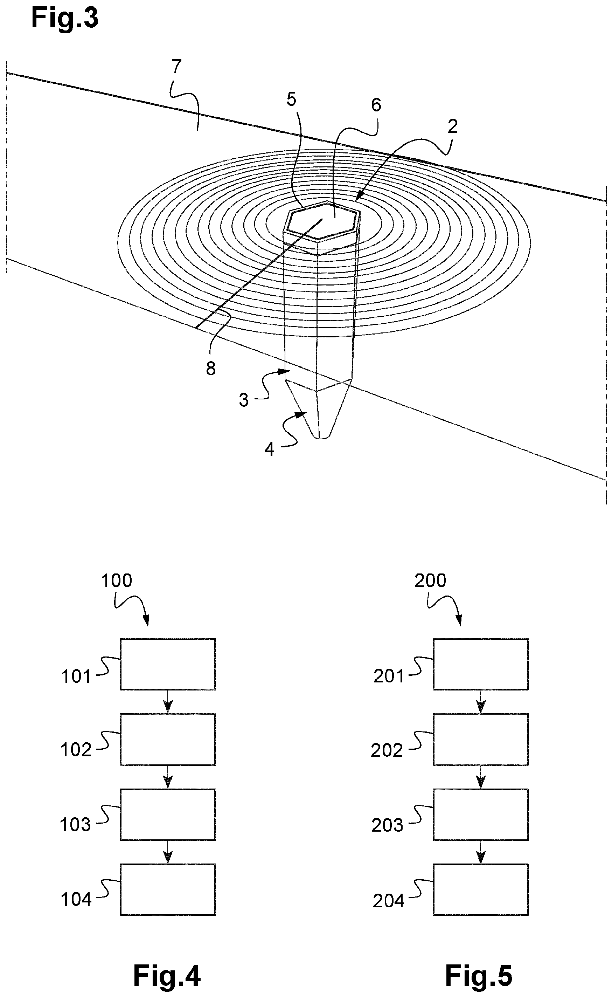

Dans une première étape d'introduction du substrat dans l'insert 101 (figure 4), on remplit l'insert 3 avec un substrat 6 comportant par exemple un tourteau de céréales et une matière calcique dans une proportion inférieure à 1,5% du poids du tourteau de céréales humide, comme par exemple 1%. Le substrat 6 est humidifié par exemple par immersion totale de l'insert 3 dans l'eau pendant quelques minutes.

Dans une deuxième étape de stérilisation 102 de l'insert 3, on stérilise l'insert 3 et son contenant, par exemple par autoclavage pendant au moins une heure au-delà de la valeur stérilisatrice de 121°C. Cette deuxième étape de stérilisation 102 n'est pas obligatoire.

Après refroidissement de l'insert 3, par exemple après attente d'au moins une heure à température ambiante, on inocule le substrat 6 par injection d'un mycélium à travers l'ouverture 5 de l'insert 3 stérile (troisième étape d'inoculation 103). On laisse le blanc de semis incuber une à deux semaines à une température de 18°.

Le mycélium injecté est de préférence employé dans son format liquide. L'injection peut se dérouler en milieu stérile, c'est-à-dire sous hotte à flux laminaire.

La préparation du mycélium liquide est réalisée au préalable. Selon un exemple de réalisation, la préparation d'un mycélium liquide comporte la succession d'étapes suivantes.

On prépare un substrat comportant 3% de glucides (aussi appelés sucres), tels que des oligosaccharides ou des polysaccharides et 97% d'eau osmosée. Les proportions de glucides peuvent varier selon la nature des glucides utilisés. Le substrat peut être préparé dans un erlenmeyer borosilicaté lui permettant d'être stérilisé. On autoclave l'erlenmeyer contenant le substrat pendant 15 minutes et on laisse refroidir 24 heures. Puis, on inocule le substrat avec un inoculum du mycélium mère issu par exemple d'une boite de pétri saine. Puis on laisse le substrat incuber par exemple une à deux semaines à 18 degrés, par exemple sur un mélangeur magnétique thermorégulé. Le mycélium liquide est alors prêt à être employé.

Après l'inoculation du substrat 6 par le mycélium liquide (troisième étape d'inoculation 103), et après l'incubation du blanc de semis, on peut lyophiliser le dispositif de blanc de semis 2 (étape de lyophilisation 104). La lyophilisation est réalisée sous flux d'air purifié. Une fois déshydraté, l'état du mycélium est durablement figé dans le temps. En effet, l'absence d'eau arrête sa propagation. L'absence d'eau lui permet également d'être moins vulnérable aux contaminations et il peut être manipulé pour être stocké ou transporté pour une utilisation ultérieure, ce qui est particulièrement intéressant pour une destination commerciale grand public du dispositif de blanc de semis 2. Le dispositif de blanc de semis 2 lyophilisé peut par exemple être conservé au frais dans des conditions de conservation alimentaires allongeant la date limite de conservation à quelques mois.

Les dispositifs de blanc de semis 2, lyophilisés ou non, sont alors prêts à être plantés en terre. La terre est de préférence à tendance minérale et argileuse et ne présente pas de facteur inhibiteur à la formation de sclérotes. Elle comporte au moins en partie de la terre crue, c'est-à-dire naturelle, comportant des microorganismes.

Les dispositifs de blanc de semis 2 sont plantés en terre avec l'ouverture 5 de la cavité 9 vers le haut, de sorte que la portion extrémale 4 en pointe soit la première portion insérée dans le sol 7 et par exemple de sorte que l'ouverture 5 des inserts 3 affleure la surface du sol 7 (figure 1). On considère que le dispositif de blanc de semis 2 affleure la surface du sol 7 lorsqu'il ne dépasse pas de plus de 1cm la surface du sol 7 ou lorsqu'il n'est pas enterré plus de 2cm sous la surface du sol. En effet si le dispositif de blanc de semis 2 est trop enfoui, on perd en performances du fait de la distance supplémentaire que doit parcourir le mycélium avant son développement à la surface du sol.

De préférence, le dispositif de blanc de semis 2 est recouvert d'une couche de terre par exemple comprise entre 0,5cm et 1,5cm.

Les dispositifs de blanc de semis 2 sont par exemple disposés en ligne, et sont par exemple plantés en quinconce comme représenté sur la figure 1.

Sur une plantation 1, les dispositifs de blanc de semis 2 sont avantageusement espacés les uns des autres d'une distance d inférieure à 50cm. En effet, pour la morille en particulier, on constate que la formation des sclérotes dont dépend la fructification est déclenchée par la présence d'obstacles ou butées dans le sol tels que des cailloux ou anfractuosités. Un sclérote est un organe de conservation présent chez certains champignons. C'est un amas de filaments mycéliens très serrés, qui sert à stocker des nutriments pour pouvoir fructifier ultérieurement. Un obstacle peut également être formé par un changement de nature ou de densité de la terre mais aussi, ce qui est plus maitrisable, par la rencontre d'un mycélium voisin. La densité de formation des sclérotes étant très dépendante de la terre employée, et certains substrats étant peu enclins à la formation de sclérotes, il est possible d'augmenter la densité de dispositifs de blanc de semis 2 pour favoriser un développement plus prolifique de sclérotes dont la taille peut être déterminée par l'alimentation prodiguée. A l'inverse, sur un sol favorable à la formation de sclérotes, il peut être possible de réduire le nombre de dispositifs 2.

Une manière de favoriser la formation des sclérotes est donc de faciliter les collisions des blancs de semis en n'espaçant pas trop entre eux les dispositifs de blanc de semis 2 dans la plantation 1. On prévoit pour cela par exemple un maillage de la plantation 1 dans lequel les dispositifs de blanc de semis 2 sont espacés les uns des autres de la distance d minimale. La formation des sclérotes peut ainsi être favorisée dans les zones de rencontre des propagations des mycéliums. En plus de favoriser la formation des sclérotes, ce maillage permet de déterminer l'emplacement de leurs formations.

Après que le dispositif de blanc de semis 2 ait été planté en terre, le mycélium se propage sur le sol, en surface au-delà de l'ouverture 5 de l'insert 3 et de manière sensiblement homogène autour de l'ouverture 5. On a ainsi représenté des cercles autour d'un centre d'insert 3 sur la figure 3 pour illustrer la propagation du mycélium par exemple au bout d'un mois dans de bonnes conditions environnementales.

La plantation 1 peut également comporter un dispositif d'alimentation 8, notamment de type goutte à goutte, configuré pour fournir une solution liquide nutritive dans les inserts 3 une fois ceux-ci en terre, par exemple par micro-irrigation.

Ce dispositif d'alimentation 8 permet d'améliorer le rendement notamment en ne limitant pas l'approvisionnement du mycélium à la capacité nutritive initiale contenue dans l'insert 3. De plus, la nutrition sous format liquide permet que celle-ci ne stagne pas en surface, comme c'est le cas de la nourriture contenue dans les sacs en plastique de l'art antérieur, ce qui l'empêche de se composter et de polluer le mycélium.

La solution liquide nutritive apportée par le dispositif d'alimentation 8 comporte par exemple de l'eau sucrée, tel qu'un mélange de 60% d'eau et de 40% de glucides (aussi appelés sucres) tels que des oligosaccharides ou des polysaccharides. L'eau sert de support d'acheminement pour les glucides jusqu'aux inserts 3. La barrière poreuse de l'insert 3 permet alors de conserver les glucides et de relâcher progressivement l'eau qui a servi à son transit, ce qui permet une accumulation exclusive de la nutrition au profit du mycélium cultivé au sein de l'insert 3. La porosité de l'insert 3 permet ainsi de nourrir le mycélium sans risque de pourrissement par stagnation de l'eau.

L'alimentation est par exemple maintenue pendant deux mois de façon à ce que chaque insert 3 se voit allouer par exemple 100ml de solution nutritive au total sur la durée de vie du mycélium.

Avec un tel dispositif d'alimentation 8, on peut plus que doubler le rendement par rapport à un dispositif de blanc de semis 2 sans alimentation additionnelle.

Le dispositif d'alimentation 8 des dispositifs de blanc de semis 2 d'une plantation 1 comporte par exemple des conduites reliées les unes aux autres en série, par exemple sur une ligne (figure 1). Ce dispositif permet un apport d'une même nourriture distribuée à tous les inserts 3 de façon homogène et centralisée, en un apport, par des apports réguliers ou à la demande.

Bien sûr, il est également possible de déposer une nourriture solide en surface au-dessus des dispositifs de blanc de semis 2 par exemple contenue dans des sacs plastiques nutritifs.

Selon un deuxième exemple de réalisation, la paroi de l'insert 3 forme le contenant pour le substrat 6 inoculé par le mycélium.

Le substrat 6 est alors réalisé sous forme de solution aqueuse sucrée.

Le procédé de préparation 200 d'un dispositif de blanc de semis 2 peut alors comporter la succession d'étapes décrites ci-après.

Dans une première étape d'introduction du substrat dans l'insert 201 (figure 5), l'insert 3 est humecté par le substrat 6 sous forme de solution aqueuse sucrée, par exemple par immersion totale de l'insert 3 dans le substrat 6 pendant quelques minutes.

Le substrat 6 comporte par exemple 20% d'eau et 80% de glucides, comme par exemple des oligosaccharides ou des polysaccharides.

Dans une deuxième étape de stérilisation 202 de l'insert 3, on stérilise l'insert 3 et son contenant comme dans l'exemple précédent, par exemple par autoclavage pendant au moins une heure au-delà de la valeur stérilisatrice de 121°C. Cette deuxième étape de stérilisation 102 n'est pas obligatoire.

Après refroidissement de l'insert 3, par exemple après attente d'au moins une heure à température ambiante, on inocule le substrat 6 par injection d'un mycélium dans la cavité 9 de l'insert 3 (troisième étape d'inoculation 203). Le mycélium injecté est de préférence employé dans son format liquide. Puis, on laisse le blanc de semis incuber à une température de 18°C pendant une à deux semaines.

Après la troisième étape d'inoculation 203 et après l'incubation du blanc de semis, on peut lyophiliser le dispositif de blanc de semis 2 (étape de lyophilisation 204).

Après mise en terre du dispositif de blanc de semis 2, on peut également fournir une alimentation additionnelle aux mycéliums dans les cavités 9 des inserts 3 telle qu'une solution liquide nutritive au moyen du dispositif d'alimentation 8 ou par dépose d'une nourriture solide de type sacs nutritifs.

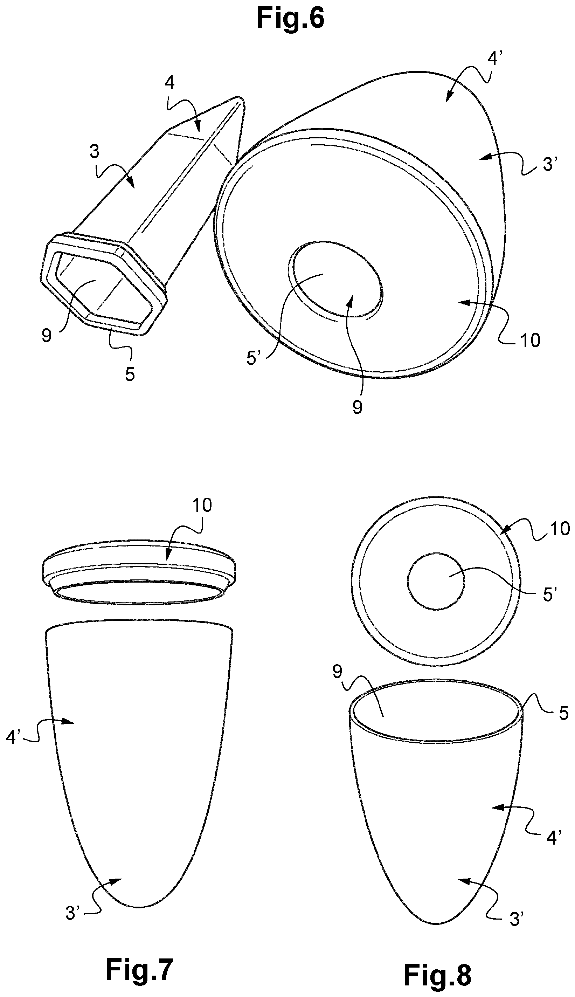

La figure 6 montre un dispositif de blanc de semis selon une variante de réalisation.

Le dispositif de blanc de semis 2 se distingue des exemples précédents par le fait que l'insert 3' présente une forme évasée. Cette forme évasée est configurée pour faciliter l'insertion en terre. La section de l'insert 3' évasé va en s'amincissant vers la portion extrémale la plus profondément enfouie dans le sol.

L'insert 3' présente dans cet exemple une portion extrémale 4' arrondie, rendant l'insert 3' moins cassant, ce qui facilite son transport. Cette forme facilite également le nettoyage de l'insert 3' en forme de contenant.

Dans cet exemple, la cavité 9' de l'insert 3' présente par exemple un volume supérieur à 250cm³, tel que 300cm³. Une capacité volumétrique supérieure à 250cm³ permet d'emmagasiner davantage de liquide nutritif à chaque nourrissement, ce qui présente un avantage en cas d'absence de dispositif d'alimentation automatisé. En effet, sans régulation automatique, il est délicat de fournir une alimentation avec suffisamment de précision pour ne pas saturer un petit contenant.

Le dispositif de blanc de semis 2 peut comporter un couvercle 10 dans lequel est ménagé une ouverture 5', par exemple centrale, accessible à l'air libre pour l'injection du mycélium dans la cavité 9', puis pour la sortie du mycélium se propageant vers la surface de la terre.

La surface externe du couvercle 10 (ou tout le couvercle 10) peut être imperméable, c'est-à-dire non-poreuse. Pour cela, le couvercle 10 est par exemple revêtu, par exemple peint ou émaillé. L'imperméabilité du couvercle 10 encourage le mycélium à quitter le dispositif 2 pour rejoindre la surface de la terre plutôt que de se concentrer sur le dispositif.

Le couvercle 10 peut être fixé de manière inamovible à l'insert 3'. Le couvercle 10 et l'insert 3' sont par exemple formés d'une seule pièce en matériau céramique, le couvercle 10 pouvant être revêtu pour être rendu imperméable.

Dans la plantation 1, le dispositif de blanc de semis 2 est par exemple recouvert d'une couche de terre. La couche de terre couvre par exemple le couvercle 10 du dispositif 2 de sorte que seule l'ouverture 5' soit à l'air libre. On réduit ainsi la perception olfactive du substrat 6 contenu dans l'insert 3', notamment dans les quelques jours précédents leur colonisation par le mycélium, ce qui permet de réduire leur attirance auprès des rongeurs ou autres animaux.

Ainsi, le couvercle 10 permet notamment de concevoir un insert 3' de plus grande capacité tout en conservant une ouverture 5' de dimension réduite accessible à l'air libre, permettant de protéger le contenu de l'insert notamment en limitant la propagation des effluves du contenu qui pourrait attirer les rongeurs.

Les autres caractéristiques de cette variante de réalisation sont similaires aux exemples de réalisation précédemment décrits.

Les figures 7 et 8 montrent un dispositif de blanc de semis selon une autre variante de réalisation.

Cet exemple se différencie du précédent par le fait que le couvercle 10 est configuré pour s'assembler de manière amovible avec l'insert 3', le couvercle 10 fermant l'insert 3' par exemple par emboitage. Ce mode de réalisation rend le remplissage et le nettoyage de l'insert 3' plus aisé.

Les autres caractéristiques de cette variante de réalisation sont similaires aux exemples de réalisation précédemment décrits.

## Revendications

1. Dispositif de blanc de semis (2) de morilles comportant un mycélium de morille et un substrat (6) **caractérisé en ce qu'**il comporte un insert (3 ; 3') poreux en céramique configuré pour être inséré en terre, l'insert (3 ; 3') poreux formant un contenant pour le substrat (6) inoculé par le mycélium de morille.

2. Dispositif de blanc de semis (2) selon la revendication 1, **caractérisé en ce que** le contenant présente une cavité (9) ouverte et une portion extrémale (4) en pointe configurée pour faciliter l'insertion en terre.

3. Dispositif de blanc de semis (2) selon l'une des revendications précédentes, **caractérisé en ce que** l'insert (3') présente une forme évasée configurée pour faciliter l'insertion en terre.

4. Dispositif de blanc de semis (2) selon l'une des revendications précédentes, **caractérisé en ce qu'**il comporte un couvercle (10) dans lequel est ménagé une ouverture (5').

5. Dispositif de blanc de semis (2) selon la revendication 4, **caractérisé en ce que** le couvercle (10) est configuré pour s'assembler de manière amovible avec l'insert (3').

6. Dispositif de blanc de semis (2) selon l'une des revendications 4 ou 5, **caractérisé en ce que** la surface externe du couvercle (10) est imperméable.

7. Dispositif de blanc de semis (2) selon l'une des revendications précédentes, **caractérisé en ce que** l'insert (3 ; 3') présente une cavité (9) ouverte de volume supérieur à 100cm³, tel que supérieur à 250cm³.

8. Dispositif de blanc de semis (2) selon l'une des revendications précédentes, **caractérisé en ce que** la porosité de la céramique est comprise entre 5% et 15%, telle que comprise entre 5% et 9%.

9. Dispositif de blanc de semis (2) selon l'une des revendications précédentes, **caractérisé en ce que** la céramique comporte un mélange de calcite et d'argile, d'oxyde de fer et de sels de carbonate de calcium.

10. Dispositif de blanc de semis (2) selon l'une des revendications précédentes, **caractérisé en ce que** le substrat (6) comporte un tourteau de céréales et une matière calcique dans une proportion inférieure à 1,5% du poids du tourteau de céréales humide, comme 1%.

11. Dispositif de blanc de semis (2) selon l'une des revendications précédentes, **caractérisé en ce qu'**il est lyophilisé.

12. Plantation (1) de dispositifs de blancs de semis (2), **caractérisée en ce qu'**elle comporte plusieurs dispositifs de blanc de semis (2) selon l'une des revendications précédentes, insérés en terre.

13. Plantation (1) de dispositifs de blancs de semis (2) selon la revendication 12, **caractérisée en ce que** les dispositifs de blanc de semis (2) sont espacés les uns des autres d'une distance (d) inférieure à 50cm.

14. Plantation (1) de dispositifs de blancs de semis (2) selon l'une des revendications 12 ou 13, **caractérisée en ce qu'**elle comporte un dispositif d'alimentation (8) configuré pour fournir une solution liquide nutritive dans les inserts (3).

15. Plantation (1) de dispositifs de blancs de semis (2) selon l'une des revendications 12 à 14, **caractérisée en ce que** les dispositifs de blanc de semis (2) sont recouverts d'une couche de terre.

## Patentansprüche

1. Vorrichtung zum Sähen (2) von Morcheln, umfassend ein Morchelmyzel und ein Substrat (6), **dadurch gekennzeichnet, dass** sie einen porösen Einsatz (3; 3') aus Keramik umfasst, der ausgelegt ist, in Erde eingesetzt zu werden, wobei der poröse Einsatz (3; 3') einen Behälter für das mit dem Morchelmyzel geimpfte Substrat (6) bildet.

2. Vorrichtung zum Sähen (2) nach Anspruch 1, **dadurch gekennzeichnet, dass** der Behälter einen offenen Hohlraum (9) und einen spitzen extremalen Abschnitt (4) aufweist, der ausgelegt ist, das Einsetzen in die Erde zu erleichtern.

3. Vorrichtung zum Sähen (2) nach einem der vorhergehenden Ansprüche, **dadurch gekennzeichnet, dass** der Einsatz (3') eine aufgeweitete Form aufweist, die ausgelegt ist, das Einsetzen in die Erde zu erleichtern.

4. Vorrichtung zum Sähen (2) nach einem der vorhergehenden Ansprüche, **dadurch gekennzeichnet, dass** sie einen Deckel (10) umfasst, in den eine Öffnung (5') eingebracht ist.

5. Vorrichtung zum Sähen (2) nach Anspruch 4, **dadurch gekennzeichnet, dass** der Deckel (10) ausgelegt ist, sich mit dem Einsatz (3') lösbar zusammenzufügen.

6. Vorrichtung zum Sähen (2) nach einem der Ansprüche 4 oder 5, **dadurch gekennzeichnet, dass** die Außenfläche des Deckels (10) wasserundurchlässig ist.

7. Vorrichtung zum Sähen (2) nach einem der vorhergehenden Ansprüche, **dadurch gekennzeichnet, dass** der Einsatz (3; 3') einen offenen Hohlraum (9) mit einem Volumen größer als 100cm³, wie beispielsweise größer als 250 cm³, aufweist.

8. Vorrichtung zum Sähen (2) nach einem der vorhergehenden Ansprüche, **dadurch gekennzeichnet, dass** die Porosität der Keramik zwischen 5% und 15%, wie beispielsweise zwischen 5% und 9%, liegt.

9. Vorrichtung zum Sähen (2) nach einem der vorhergehenden Ansprüche, **dadurch gekennzeichnet, dass** die Keramik ein Gemisch aus Calcit und Ton, Eisenoxid und Calciumcarbonatsalzen umfasst.

10. Vorrichtung zum Sähen (2) nach einem der vorhergehenden Ansprüche, **dadurch gekennzeichnet, dass** das Substrat (6) einen Getreidepresskuchen und ein Calcium-Material mit einem Anteil kleiner als 1,5% des Gewichts des feuchten Getreidepresskuchens, wie 1%, umfasst.

11. Vorrichtung zum Sähen (2) nach einem der vorhergehenden Ansprüche, **dadurch gekennzeichnet, dass** sie gefriergetrocknet ist.

12. Pflanzung (1) mit Vorrichtungen zum Sähen (2), **dadurch gekennzeichnet, dass** sie mehrere in die Erde eingesetzte Vorrichtungen zum Sähen (2) nach einem der vorhergehenden Ansprüche umfasst.

13. Pflanzung (1) mit Vorrichtungen zum Sähen (2) nach Anspruch 12, **dadurch gekennzeichnet, dass** die Vorrichtungen zum Sähen (2) mit einem Abstand (d) kleiner als 50cm voneinander beabstandet sind.

14. Pflanzung (1) mit Vorrichtungen zum Sähen (2) nach einem der Ansprüche 12 oder 13, **dadurch gekennzeichnet, dass** sie eine Versorgungsvorrichtung (8) umfasst, die ausgelegt ist, eine flüssige Nährlösung in den Einsätzen (3) bereitzustellen.

15. Pflanzung (1) mit Vorrichtungen zum Sähen (2) nach einem der Ansprüche 12 bis 14, **dadurch gekennzeichnet, dass** die Vorrichtungen zum Sähen (2) mit einer Erdschicht bedeckt sind.

## Claims

1. Morel seedling spawn device (2) comprising a morel mycelium and a substrate (6), **characterized in that** it comprises a porous ceramic insert (3; 3') configured to be inserted in earth, the porous insert (3; 3') forming a container for the substrate (6) inoculated with the morel mycelium.

2. Seedling spawn device (2) according to Claim 1, **characterized in that** the container has an open cavity (9) and a pointed end portion (4) configured to make the insertion in earth easier.

3. Seedling spawn device (2) according to either of the preceding claims, **characterized in that** the insert (3') has a flared shape configured to make the insertion in earth easier.

4. Seedling spawn device (2) according to one of the preceding claims, **characterized in that** it comprises a cover (10) in which an opening (5') is provided.

5. Seedling spawn device (2) according to Claim 4, **characterized in that** the cover (10) is configured to be removably assembled with the insert (3').

6. Seedling spawn device (2) according to either of Claims 4 and 5, **characterized in that** the external surface of the cover (10) is impermeable.

7. Seedling spawn device (2) according to one of the preceding claims, **characterized in that** the insert (3; 3') has an open cavity (9) with a volume greater than 100 cm³, such as greater than 250 cm³.

8. Seedling spawn device (2) according to one of the preceding claims, **characterized in that** the porosity of the ceramic is between 5% and 15%, such as between 5% and 9%.

9. Seedling spawn device (2) according to one of the preceding claims, **characterized in that** the ceramic comprises a mixture of calcite and clay, iron oxide and calcium carbonate salts.

10. Seedling spawn device (2) according to one of the preceding claims, **characterized in that** the substrate (6) comprises a cereal oil cake and a calcium material in a proportion of less than 1.5% of the weight of the wet cereal oil cake, such as 1%.

11. Seedling spawn device (2) according to one of the preceding claims, **characterized in that** it is freeze-dried.

12. Plantation (1) of seedling spawn devices (2), **characterized in that** it comprises a plurality of seedling spawn devices (2) according to one of the preceding claims, inserted in earth.

13. Plantation (1) of seedling spawn devices (2) according to Claim 12, **characterized in that** the seedling spawn devices (2) are spaced apart from one another by a distance (d) of less than 50 cm.

14. Plantation (1) of seedling spawn devices (2) according to either of Claims 12 and 13, **characterized in that** it comprises a supply device (8) configured to provide a nutritive liquid solution to the inserts (3).

15. Plantation (1) of seedling spawn devices (2) according to one of Claims 12 to 14, **characterized in that** the seedling spawn devices (2) are covered with a layer of earth.
